# EUROPÄISCHE PATENTANMELDUNG

(11) **EP 4 219 604 A1**
(43) Veröffentlichungstag der Anmeldung: **02.08.2023**
(21) Anmeldenummer: 22153971.1
(22) Anmeldetag: 28.01.2022
(51) Int. Cl.: C08J 3/22

(54) **MASTERBATCH UND VERFAHREN ZUR HERSTELLUNG**

(71) Anmelder: Faber- Castell AG, 90546 Stein (DE)
(72) Erfinder: Lugert, Gerhard, 90431 Nürnberg (DE); Pöllmann, Christian, 90765 Fürth (DE); Soni, Smita, Kadamba, Old Goa, Goa (IN)
(74) Vertreter: Schlögl, Markus

(57) **Zusammenfassung**

Die Erfindung betrifft einen Masterbatch aus einer Grundmasse enthaltend wenigstens ein Wachs und/oder Öl, wenigstens ein Farbpigment, und wenigstens einen Kunststoff, wobei das Wachs und/oder Öl mit einem Anteil von 40 bis 80 Gew.-% und das Farbpigment mit einem Anteil von 1 bis 25 Gew.-% enthalten ist sowie ein Verfahren zur Herstellung eines solchen Masterbatches.

Ferner betrifft die Erfindung eine Kunststoffmasse und/oder ein Kunststoffformteil und/oder einen Kunststoffkörper, eingefärbt mit einem Masterbatch sowie ein Verfahren zur Herstellung einer solchen Kunststoffmasse und/oder eines solchen Kunststoffformteils und/oder Kunststoffkörpers.

## Beschreibung

Die Erfindung betrifft einen Masterbatch sowie ein Verfahren zur Herstellung eines Masterbatchs. Des Weiteren betrifft die Erfindung eine Kunststoffmasse und/oder ein Kunststoffformteil und/oder einen Kunststoffkörper eingefärbt mit einem solchen Masterbatch sowie ein Verfahren zum Einfärben einer Kunststoffmasse und/oder eines Kunststoffformteils und/oder eines Kunststoffkörpers.

Unter dem Begriff Masterbatch sind bekanntermaßen Kunststoffadditive in Form von Granulaten zu verstehen, in denen Farbmittel wie Farbpigmente enthalten sind und die nachfolgend einem Kunststoff beigemischt werden, um diesen einzufärben. Bei einem Masterbatch handelt es sich sozusagen um ein Farbkonzentrat oder Farbgranulat, d.h. der Anteil des Farbmittels in dem Masterbatch ist höher als in der hiermit eingefärbten Kunststoffmasse bzw. einem hieraus gefertigten Kunststoffformteil oder Kunststoffkörper.

Aus WO 2020 028 925 A1 ist beispielsweise ein Herstellungsverfahren für einen Masterbatch zur Verwendung in der Kunststoffherstellung, insbesondere zur Einfärbung von Kunststoffprodukten bekannt. Der Masterbatch kann als Bestandteile ein oder mehrere Wachse, ein Polymer, einen Füllstoff und ein oder mehrere Farbpigmente sowie weitere Zusatzstoffe enthalten.

DE 689 24 826 T2 beschreibt ein Pigmentmasterbatch oder Pigmentkonzentrat für füllstoffhaltige Polypropylenmassen und dessen Herstellung umfassend Pigmente und Dispergiermittel, beispielsweise Metallsalze oder Wachse, sowie ein Polymer wie beispielsweise Polyethylen oder Polypropylen, und gegebenenfalls Füllstoffe oder weitere Zusatzstoffe.

Auch aus EP 1 238 026 B1 sind Pigmentkonzentrate, enthaltend mindestens ein Farbstoffpigment, ein Polyethylenwachs und ferner einen thermoplastischen Kunststoff sowie Zuschlagstoffe, bekannt.

Bei den aus dem Stand der Technik bekannten Pigmentkonzentraten sind jedoch oftmals hohe Anteile an teuren Farbpigmenten erforderlich, um die erforderliche Brillanz oder Leuchtkraft im Endprodukt zu erreichen. Ferner enthalten die bekannten Pigmentkonzentrationen oftmals hohe Anteile an Kunststoffen, um eine ausreichende Verarbeitbarkeit bei der Einfärbung eines Kunststoffes zu gewährleisten.

Es ist Aufgabe der Erfindung einen Masterbatch sowie ein Verfahren zur Herstellung eines Masterbatchs anzugeben, mit welchem sich insbesondere kräftige Farben in einem Endprodukt erreichen lassen. Ferner ist es Aufgabe der Erfindung eine Kunststoffmasse und/oder ein Kunststoffformteil und/oder einen Kunststoffkörper eingefärbt mit einem solchen Masterbatch sowie ein Verfahren zur Einfärbung einer Kunststoffmasse und/oder eines Kunststoffformteils und/oder eines Kunststoffkörpers anzugeben.

Die erstgenannte Aufgabe wird gelöst mit einem Masterbatch (oder: Pigmentkonzentrat oder Farbgranulat oder Kunststoffadditiv) mit den Merkmalen gemäß Anspruch 1. Der Masterbatch umfasst eine Grundmasse enthaltend wenigstens ein Wachs und/oder Öl, wenigstens ein Farbpigment, und wenigstens einen Kunststoff (oder: Trägerpolymer). Erfindungsgemäß ist das Wachs und/oder Öl mit einem Anteil von 40 bis 80 Gew.-% und das Farbpigment mit einem Anteil von 1 bis 25 Gew.-% - bezogen auf die Grundmasse des Masterbatches - enthalten.

Das oder die Wachs(e) und/oder Öl(e) fungieren als (Pigment-) Dispergiermittel und das oder die Farbpigment(e) sind in dem Wachs und/oder Öl eingebettet. Das oder die Wachs(e) und/oder Öl(e) bilden somit eine Wachs- und/oder Ölmatrix, in welcher die Farbpigmente fein verteilt und stabilisiert sind. Die vorstehend genannten erfindungsgemäßen Anteile beziehen sich jeweils auf den Gesamtanteil der in dem Masterbatch vorhandenen Wachse und/oder Öle bzw. Farbpigmente.

Masterbatche oder Pigmentkonzentrate werden zum Einfärben von Kunststoffen eingesetzt. Es hat sich nun überraschenderweise gezeigt, dass der erfindungsgemäße Anteil von 1 bis 25 Gew.-% an Farbpigment(en) in Kombination mit der Wachs- und/oder Ölmatrix mit einem Anteil von 40 bis 80 Gew.-% in dem Masterbatch bereits ausreichend ist, um eine sehr kräftige Einfärbung zu erreichen. Durch den im Masterbatch enthaltenen Kunststoff wird ein solches späteres Vermischen des Masterbatches mit einem einzufärbenden Kunststoff erleichtert.

Bereits mit einem Anteil des Farbpigmentes von 1 bis 10 Gew.-%, insbesondere einem Anteil des Farbpigmentes von 1 bis 9 Gew.-% - bezogen auf die Grundmasse des Masterbatchs - lassen sich sehr gute Ergebnisse erzielen. Durch diesen im Vergleich zu bekannten Masterbatches geringen Anteil an teuren Farbpigmenten lassen sich die Kosten reduzieren.

Vorzugsweise können als Farbpigmente organische Pigmente, insbesondere Pigmente aus der Gruppe der Azo-Pigmente, Phthalocyanin-Pigmente, Perylen-Pigmente, DPP-Pigmente, Chinacridone, Isoindoline und/oder Dioxazine enthalten sein. Diese Farbpigmente weisen grundsätzlich eine geringere Temperaturstabilität im Vergleich zu anorganischen Farbpigmenten auf und zersetzen sich wenigstens teilweise ab einer Temperatur von etwa 160°C. Organische Farbpigmente konnten somit zur Einfärbung von Kunststoffen, die eine hohe Verarbeitungstemperatur von etwa 300°C aufweisen, nicht oder nur mit hohen Anteilen eingesetzt werden. Besonders überraschend hat sich nun gezeigt, dass diese Pigmente in der erfindungsgemäßen Wachs- und/oder Ölmatrix derart stabilisiert werden, dass dieser Zersetzungsprozess nicht oder kaum stattfindet und mit dem Masterbatch auch Kunststoffe mit hohen Verarbeitungstemperaturen eingefärbt werden können.

Alternativ oder zusätzlich können in vorteilhafter Weise auch anorganische Farbpigmente, insbesondere Eisenoxidpigmente, Weißpigmente, wie beispielsweise Titandioxide, Lithopone, eine Mischung aus Bariumsulfat und Zinksulfid, Metalleffektpigmente, Ultramarinpigmente und/oder Ruß, enthalten sein.

Gemäß einer vorteilhaften Ausführungsform ist Wachs und/oder Öl mit einem Anteil von 50 bis 70 Gew.-% enthalten.

In verschiedenen Ausführungsformen können ein Wachs und/oder Öl, insbesondere zwei Wachse und/oder Öle, besonders bevorzugt drei Wachse und/oder Öle enthalten sein. Vorzugsweise weisen das oder die Wachs(e) und/oder Öl(e) Tropfpunkt zwischen 45 und 160°C auf. Als besonders geeignet hat sich der Einsatz von Paraffinwachsen, Polyolefinwachsen, Hybridwachsen und/oder Paraffinölen erwiesen. Solche Paraffinwachse (CAS-Nr. 8002-74-2) weisen Tropfpunkte zwischen 45 und 80°C auf und sind beispielsweise unter den Handelsnamen Sasolwax Fischer Tropsch Medium Waxes¹⁾ oder Sasolwax 6530A¹⁾ erhältlich. Als Polyolefinwachs kann beispielsweise ein Polypropylenwachs auf Metallocenbasis, welches unter dem Handelsnamen Ceridust 6050 M²⁾ erhältlich ist, eingesetzt werden. Dieses weist einen Tropfpunkt von 142 bis 148°C auf. Ein weiteres Polyolefinwachs ist beispielsweise das unter dem Handelsnamen Licowax PEP 192²⁾ erhältliche oxidierte Polypropylenwachs, welches eine hohe Viskosität und einen Tropfpunkt von 123°C aufweist. Ein Hybridwachs ist beispielsweise unter dem Handelsnamen Deurex H9620M³⁾ erhältlich und weist einen Tropfpunkt von 143 bis 153°C auf.

Um die Verteilung und Stabilisierung der Farbpigmente zu fördern, ist in der Grundmasse des Masterbatchs gemäß einer vorteilhaften Weiterbildung ein Dispergierhilfsmittel enthalten, insbesondere mit einem Anteil von maximal 7 Gew.-%, besonders bevorzugt mit einem Anteil von maximal 5 Gew.-%, weiter bevorzugt mit einem Anteil von 1 bis 4 Gew.-% - bezogen auf die Grundmasse des Masterbatchs enthalten. Als Dispergierhilfsmittel haben sich insbesondere Fettsäuren, wie beispielsweise Stearinsäure, Palmitinsäure und/oder Laurinsäure, und/oder Fettsäuresalze, vorzugsweise aufweisend ein Kation ausgewählt aus der I., II. oder III. Hauptgruppe, wie beispielsweise Aluminiumstearat, Natriumstearat, Kaliumstearat, Calciumstearat, Magnesiumstearat oder Zinkstearat, und/oder weitere Fettsäurederivate als geeignet erwiesen.

Der Kunststoff ist vorzugsweise mit einem Anteil von 5 bis 30 Gew.-% - bezogen auf die Grundmasse des Masterbatchs - enthalten. Als Kunststoff sind insbesondere ein thermoplastischer Kunststoff, insbesondere Polyolefine wie Polyethylen oder Polypropylen, Polystyrol, Polyamid, Naturkunststoffe und/oder biologisch abbaubare Kunststoffe, also beispielsweise Kunststoffe, die aus thermoplastischer Stärke, Cellulose, abbaubaren Polyestern und Polyactid (PLA) hergestellt sind, enthalten. Als Polyamid sei beispielsweise das unter dem Handelsnamen erhältliche Polyamid Nylatron GS-60⁴⁾ genannt.

In Ausgestaltungen kann in der Grundmasse ferner ein Füllstoff enthalten sein, wobei dieser insbesondere mit einem Anteil von maximal 12 Gew.-%, besonders bevorzugt mit einem Anteil von maximal 10 Gew.-%, weiter bevorzugt mit einem Anteil von maximal 5 Gew.-% enthalten ist. Ferner kann als Füllstoff insbesondere wenigstens ein anorganischer Füllstoff enthalten sein, vorzugsweise Talkum, Bimsmehl, Kaolin, Glimmer, Aluminiumsilikat, Ton und/oder Calciumcarbonat, wobei sich Talkum als besonders geeignet herausgestellt hat.

Zusammenfassend lässt sich für den erfindungsgemäßen Masterbatch folgende Basisrezeptur angeben:

| | |
|---|---|
| Wachs und/oder Öl | 40 bis 80 Gew. % |
| Farbpigment | 1 bis 25 Gew. % |
| Kunststoff | 5 bis 30 Gew. % |
| Dispergierhilfsmittel | 0 bis 7 Gew. % |
| Füllstoff | 0 bis 12 Gew.-% |

Typischerweise liegt der Masterbatch in Form kleiner Partikel mit einer mittleren Partikelgröße von etwa 2x2x2 mm vor.

Hinsichtlich des Verfahrens zur Herstellung eines erfindungsgemäßen Masterbatchs wird die Aufgabe gelöst mit einem Verfahren mit den Merkmalen gemäß Anspruch 11. Zur Herstellung einer Grundmasse werden das wenigstens eine Farbpigment, das wenigstens eine Wachs und/oder Öl und der wenigstens eine Kunststoff gemischt und bei einer Temperatur zwischen 80 und 170°C, insbesondere 90 bis 160°C aufgeschmolzen und homogenisiert, wobei das Wachs und/oder Öl derart zugegeben wird, dass dieses mit einem Anteil von 40 bis 80 Gew.-% in der Grundmasse enthalten ist, und wobei das Farbpigment derart zugegeben wird, dass dieses mit einem Anteil von 1 bis 25 Gew.-% in der Grundmasse enthalten ist.

Das Vermischen und Homogenisieren der Rohmaterialien des Masterbatchs, also Wachs(e) und/oder Öl(e), Farbpigment(e) und Kunststoff(e) sowie gegebenenfalls weiterer Rohmaterialien, erfolgt beispielsweise in Schnellmischern, Knetern, Compoundern oder auch in Extrudern, z.B. Scheckenextrudern. Dabei kommt es zu einer Erweichung der Grundmasse bzw. zu einem Aufschmelzen der Wachse und/oder Öle und des Kunststoffes und die Farbpigmente werden in der Mischung bzw. Schmelze fein verteilt und darin gebunden oder eingebettet. Aus der Grundmasse lassen sich dann beispielsweise Stränge mit einem Durchmesser von etwa 2 mm extrudieren, die nach dem Erkalten eine ausreichend feste Konsistenz aufweisen, um in wenige Millimeter lange Abschnitte, etwa 2 mm, geschnitten zu werden. Alternativ kann die Grundmasse nach dem Erkalten beispielsweise auch zerkleinert werden, um den Masterbatch zu erhalten.

Vorzugsweise wird das Farbpigment derart zugegeben, dass dieses mit einem Anteil von 1 bis 10 Gew.-%, insbesondere mit einem Anteil von 1 bis 9 Gew.-% in der Grundmasse enthalten ist.

Als Farbpigmente können organische Farbpigmente, insbesondere Pigmente aus der Gruppe der Azo-Pigmente, Phthalocyanin-Pigmente, Perylen-Pigmente, DPP-Pigmente, Chinacridone, Isoindoline und/oder Dioxazine oder anorganische Farbpigmente, insbesondere Eisenoxidpigmente, Weißpigmente, Lithopone, Metalleffektpigmente, Ultramarinpigmente und/oder Ruß, zugegeben bzw. beigemischt werden.

Das Wachs und/oder Öl wird vorzugsweise derart zugegeben, dass das Wachs und/oder Öl mit einem Anteil von 50 bis 70 Gew.-% in der Grundmasse enthalten ist.

Weiter werden wenigstens ein Wachs und/oder Öl, insbesondere zwei Wachse und/oder Öle, besonders bevorzugt drei Wachse und/oder Öle zugegeben, wobei insbesondere ein Wachs und/oder Öl mit einem Tropfpunkt zwischen 45 und 160°C zugegeben wird, und/oder wobei als Wachs und/oder Öl insbesondere Paraffinwachse, Polyolefinwachse, Hybridwachse und/oder Paraffinöl zugegeben werden.

Bei einer bevorzugten Ausführungsform wird ein Dispergierhilfsmittel zugegeben, um die Verteilung der Farbpigmente weiter zu fördern und diese in der Wachs- und/oder Ölmatrix zu stabilisieren. Das Dispergierhilfsmittel wird insbesondere mit einem Anteil von maximal 7 Gew.-%, besonders bevorzugt mit einem Anteil von maximal 5 Gew.-%, weiter bevorzugt mit einem Anteil von 1-4 Gew.-% zugegeben, und/oder als Dispergierhilfsmittel werden insbesondere Fettsäuren und/oder Fettsäuresalze, vorzugsweise aufweisend ein Kation ausgewählt aus der I., II. oder III. Hauptgruppe, und/oder Fettsäurederivate zugegeben.

Der Kunststoff wird vorzugsweise derart zugegeben, dass dieser mit einem Anteil von 5 bis 30 Gew.-% in der Grundmasse enthalten ist. Als Kunststoff kann ein thermoplastischer Kunststoff, insbesondere Polyolefine, Polystyrol, Polyamid, Naturkunststoffe und/oder biologisch abbaubare Kunststoffe zugegeben werden.

In Ausgestaltungen kann wenigstens ein Füllstoff zugegeben werden, wobei der Füllstoff insbesondere derart zugegeben wird, dass dieser mit einem Anteil von maximal 12 Gew.-%, besonders bevorzugt mit einem Anteil von maximal 10 Gew.-%, weiter bevorzugt mit einem Anteil von maximal 5 Gew.-% in der Grundmasse enthalten ist, und/oder wobei als Füllstoff insbesondere wenigstens ein anorganischer Füllstoff, vorzugsweise Talkum, Bimsmehl, Kaolin, Glimmer, Aluminiumsilikat, Ton und/oder Calciumcarbonat, besonders bevorzugt Talkum zugegeben wird.

Hinsichtlich der Kunststoffmasse und/oder dem Kunststoffformteil und/oder dem Kunststoffkörper, der mit einem erfindungsgemäßen Masterbatch und/oder mit einem nach dem erfindungsgemäßen Verfahren hergestellten Masterbatch eingefärbt wurde, wird die Aufgabe gelöst mit einer Kunststoffmasse und/oder einem Kunststoffformteil und/oder einem Kunststoffkörper mit den Merkmalen des Anspruches 12. Erfindungsgemäß enthält die Kunststoffmasse und/oder das Kunststoffformteil und/oder der Kunststoffkörper einen Kunststoff oder ist aus einem Kunststoff gebildet, der eine Verarbeitungstemperatur größer 230°C, insbesondere größer 270°C, besonders bevorzugt größer 300°C aufweist, wobei der Kunststoff besonders bevorzugt ein Polyamid oder ein Polyester ist oder enthält.

Die Kunststoffe Polyamid oder Polyester haben Schmelzpunkte von über 200°C können daher nur bei hohen Temperaturen verarbeitet werden. Überraschenderweise hat sich gezeigt, dass sich auch Farbpigmente, die weniger temperaturstabil sind, in dem erfindungsgemäßen Masterbatch derart stabilisiert sind, dass sich diese trotz der hohen Verarbeitungstemperaturen nicht oder nur kaum zersetzen. Dadurch können auch Farbpigmente eingesetzt werden, die in der Regel bei solchen Verarbeitungstemperaturen nicht stabil sind.

Vorzugsweise ist das wenigstens eine Farbpigment mit einem Anteil von maximal 4 Gew.-% in der Kunststoffmasse und/oder dem Kunststoffformteil und/oder dem Kunststoffkörper enthalten. Überraschenderweise hat sich gezeigt, dass ein solcher Anteil an Farbmittel ausreichend ist, um sehr kräftige Farben in der Kunststoffmasse und/oder dem Kunststoffformteil und/oder dem Kunststoffkörper zu erreichen.

Hinsichtlich des Verfahrens zum Einfärben einer Kunststoffmasse und/oder eines Kunststoffformteils und/oder eines Kunststoffkörpers mit einem erfindungsgemäßen Masterbatch und/oder mit einem nach dem erfindungsgemäßen Verfahren hergestellten Masterbatch wird die Aufgabe gelöst mit einem Verfahren mit den Merkmalen gemäß Anspruch 14. Die Kunststoffmasse und/oder das Kunststoffformteil und/oder der Kunststoffkörper enthält einen Kunststoff oder aus einem Kunststoff gebildet ist, der eine Verarbeitungstemperatur größer 230°C, insbesondere größer 270°C, besonders bevorzugt größer 300°C aufweist, wobei der Kunststoff besonders bevorzugt ein Polyamid oder ein Polyester ist oder enthält, und wobei der Kunststoff und der Masterbatch gemischt und bei einer Temperatur größer 230°C, insbesondere größer 270°C, besonders bevorzugt größer 300°C homogenisiert werden.

Die Herstellung bzw. Einfärbung der Kunststoffmasse und/oder des Kunststoffformteils und/oder des Kunststoffkörpers erfolgt beispielsweise mittels Extrusionsverfahren oder im Spritzgussverfahren. Der einzufärbende Kunststoff und der Masterbatch werden aufgeschmolzen und homogenisiert, wodurch sich die Farbpigmente in der Kunststoffmasse verteilen und diese einfärben. Anschließend wird die Kunststoffmasse beispielsweise extrudiert und abgekühlt. Alternativ kann die Kunststoffmasse unter hohem Druck in ein Spritzgießwerkzeug eingespritzt werden, um eine bestimmte Form zu erhalten. Nach dem Erkalten kann das Kunststoffformteil und/oder der Kunststoffkörper aus der Spritzgusswerkzeug entnommen werden.

Vorzugsweise wird der Masterbatch in einem solchen Verhältnis zu dem Kunststoff zugegeben, dass das wenigstens eine Farbpigment mit einem Anteil von maximal 4 Gew.-% in der Kunststoffmasse und/oder dem Kunststoffformteil und/oder dem Kunststoffkörper enthalten ist.

Nachfolgend sind zwei Beispielrezepturen für einen Masterbatch angeführt, der zum Einfärben einer Kunststoffmasse und/oder eines Kunststoffformteils und/oder eines Kunststoffkörpers eingesetzt werden kann.

Zur Herstellung des Masterbatches werden die Rohmaterialien der Grundmasse in einem Schnellmischer oder einem Extruder bei einer erhöhten Temperatur von etwa 100°C (erste Beispielrezeptur) bzw. 150°C (zweite Beispielrezeptur) vermischt, aufgeschmolzen und homogenisiert. Dabei kommt es zu einer Erweichung der Grundmasse bzw. zu einem Aufschmelzen der Wachse und/oder Öle und des Kunststoffes und die Farbpigmente werden in der Mischung bzw. Schmelze fein verteilt und darin gebunden oder eingebettet.

Die erste Beispielrezeptur enthält zwei Paraffinwachse, die sich hinsichtlich des Tropfpunktes unterscheiden sowie ein Paraffinöl. Als Kunststoff ist ein Low Linear Density Polyethylen enthalten. Als Farbpigmente sind organische Farbpigmente aus der Gruppe der Azo-Pigmente enthalten in den Farben rot (Pigment Red 48:2) und orange (Pigment Orange 13) enthalten. Ferner sind ein Dispergierhilfsmittel, vorliegend Aluminiumstearat, um die Dispersion der der Farbpigmente zu fördern sowie Talkum als Füllstoff enthalten.

### Beispiel 1

Beispielrezeptur für einen Masterbatch mit einer Partikelgröße von 2x2x2 mm

| | |
|---|---|
| Paraffinwachs 1¹⁾ | 29,50 Gew.-% |
| Paraffinwachs 2¹⁾ | 27,00 Gew. % |
| LLDPE (MFI-50, TS - 11.5, SP -97 | 27,00 Gew. % |
| Aluminiumstearat (HG Grade) | 1,20 Gew. % |
| Light Liquid Paraffin Oil | 7,10 Gew. % |
| Talkum (CAS 14807-96-6) | 3,10 Gew. % |
| Pigment Red 48:2 | 2,80 Gew. % |
| Pigment Orange 13 | 2,30 Gew. % |

Die zweite Beispielrezeptur enthält ein Paraffinwachs und ein Polypropylenwachs auf Metallocenbasis, die sich hinsichtlich des Tropfpunktes unterscheiden sowie ein Paraffinöl. Als Kunststoff ist wiederum ein Low Linear Density Polyethylen enthalten. Als Farbpigment ist das organische Farbpigment Pigment Yellow 74 aus der Gruppe der Azo-Pigmente enthalten. Ferner sind auch hier ein Dispergierhilfsmittel, vorliegend Calciumstearat, um die Dispersion der der Farbpigmente zu fördern sowie Talkum als Füllstoff enthalten.

### Beispiel 2

Beispielrezeptur für einen Masterbatch mit einer Partikelgröße von 2x2x2 mm

| | |
|---|---|
| Paraffinwachs 1¹⁾ | 32,00 Gew.-% |
| Ceridust 6050M²⁾ | 20,00 Gew. % |
| LLDPE (MFI-50, TS - 11.5, SP -97 | 28,00 Gew. % |
| Calciumstearat | 1,20 Gew. % |
| Light Liquid Paraffin Oil | 7,10 Gew. % |
| Talkum (CAS 14807-96-6) | 3,10 Gew. % |
| Pigment Yellow 74 | 8,60 Gew. % |

### Hersteller:

1) Sasol Germany GmbH, Anckelmannsplatz 1, D-20537 Hamburg
2) Clariant Plastics & Coatings (Deutschland GmbH), Ludwig-Hermann-Str. 100, D-86368 Gersthofen
3) Deurex AG, Dr. Bergius Str. 8, D-06719 Elsterau
4) Polytron Kunststoff Technik, An der Zinkhütte 17, D-51469 Bergisch Gladbach

## Patentansprüche

1. Masterbatch aus einer Grundmasse enthaltend wenigstens ein Wachs und/oder Öl, wenigstens ein Farbpigment, und wenigstens einen Kunststoff,
**dadurch gekennzeichnet, dass**
das Wachs und/oder Öl mit einem Anteil von 40 bis 80 Gew.-% und das Farbpigment mit einem Anteil von 1 bis 25 Gew.-% enthalten ist.

2. Masterbatch nach Anspruch 1,
**dadurch gekennzeichnet, dass**
das Farbpigment mit einem Anteil von 1 bis 10 Gew.-%, insbesondere mit einem Anteil von 1 bis 9 Gew.-% enthalten ist.

3. Masterbatch nach einem der Ansprüche 1 oder 2,
**dadurch gekennzeichnet, dass**
als Farbpigmente organische Farbpigmente, insbesondere Pigmente aus der Gruppe der Azo-Pigmente, Phthalocyanin-Pigmente, Perylen-Pigmente, DPP-Pigmente, Chinacridone, Isoindoline und/oder Dioxazine enthalten sind.

4. Masterbatch nach einem der vorhergehenden Ansprüche,
**dadurch gekennzeichnet, dass**
als Farbpigmente anorganische Farbpigmente, insbesondere Eisenoxidpigmente, Weißpigmente, Lithopone, Metalleffektpigmente, Ultramarinpigmente und/oder Ruß, enthalten sind.

5. Masterbatch nach einem der vorhergehenden Ansprüche,
**dadurch gekennzeichnet, dass**
das Wachs und/oder Öl mit einem Anteil von 50 bis 70 Gew.-% enthalten ist.

6. Masterbatch nach einem der vorhergehenden Ansprüche,
**dadurch gekennzeichnet, dass**
wenigstens ein Wachs und/oder Öl, insbesondere zwei Wachse und/oder Öle, besonders bevorzugt drei Wachse und/oder Öle enthalten sind, wobei insbesondere ein Wachs und/oder Öl mit einem Tropfpunkt zwischen 45 und 160°C enthalten ist, und/oder
wobei als Wachs und/oder Öl insbesondere Paraffinwachse, Polyolefinwachse, Hybridwachse und/oder Paraffinöl enthalten sind.

7. Masterbatch nach einem der vorhergehenden Ansprüche,
**dadurch gekennzeichnet, dass**
wenigstens ein Dispergierhilfsmittel enthalten ist,
wobei das Dispergierhilfsmittel insbesondere mit einem Anteil von maximal 7 Gew.-%, besonders bevorzugt mit einem Anteil von maximal 5 Gew.-%, weiter bevorzugt mit einem Anteil von 1-4 Gew.-% enthalten ist, und/oder
wobei als Dispergierhilfsmittel insbesondere Fettsäuren und/oder Fettsäuresalze, vorzugsweise aufweisend ein Kation ausgewählt aus der I., II. oder III. Hauptgruppe, und/oder Fettsäurederivate enthalten sind.

8. Masterbatch nach einem der vorhergehenden Ansprüche,
**dadurch gekennzeichnet, dass**
der Kunststoff mit einem Anteil von 5 bis 30 Gew.-% enthalten ist.

9. Masterbatch nach einem der vorhergehenden Ansprüche,
**dadurch gekennzeichnet, dass**
als Kunststoff ein thermoplastischer Kunststoff, insbesondere Polyolefine, Polystyrol, Polyamid, Naturkunststoffe und/oder biologisch abbaubare Kunststoffe enthalten sind.

10. Masterbatch nach einem der vorhergehenden Ansprüche,
**dadurch gekennzeichnet, dass**
wenigstens ein Füllstoff enthalten ist,
wobei Füllstoff insbesondere mit einem Anteil von maximal 12 Gew.-%, besonders bevorzugt mit einem Anteil von maximal 10 Gew.-%, weiter bevorzugt mit einem Anteil von maximal 5 Gew.-% enthalten ist, und/oder
wobei als Füllstoff insbesondere wenigstens ein anorganischer Füllstoff, vorzugsweise Talkum, Bimsmehl, Kaolin, Glimmer, Aluminiumsilikat, Ton und/oder Calciumcarbonat, besonders bevorzugt Talkum enthalten ist.

11. Verfahren zur Herstellung eines Masterbatches nach einem der Ansprüche 1 bis 10,
**dadurch gekennzeichnet, dass**
zur Herstellung einer Grundmasse das wenigstens eine Farbpigment, das wenigstens eine Wachs und/oder Öl und der wenigstens eine Kunststoff gemischt und bei einer Temperatur zwischen 80 und 170°C, insbesondere 90 bis 160°C aufgeschmolzen und homogenisiert werden, wobei das Wachs und/oder Öl derart zugegeben wird, dass dieses mit einem Anteil von 40 bis 80 Gew.-% in der Grundmasse enthalten ist, und wobei das Farbpigment derart zugegeben wird, dass dieses mit einem Anteil von 1 bis 25 Gew.-% in der Grundmasse enthalten ist.

12. Kunststoffmasse und/oder Kunststoffformteil und/oder Kunststoffkörper, eingefärbt mit einem Masterbatch nach einem der Ansprüche 1 bis 10 und/oder einem nach einem Verfahren nach Anspruch 11 hergestellten Masterbatch,
**dadurch gekennzeichnet, dass**
die Kunststoffmasse und/oder das Kunststoffformteil und/oder der Kunststoffkörper einen Kunststoff enthält oder aus einem Kunststoff gebildet ist, der eine Verarbeitungstemperatur größer 250°C, insbesondere größer 270°C, besonders bevorzugt größer 300°C aufweist, wobei der Kunststoff besonders bevorzugt ein Polyamid oder ein Polyester ist oder enthält.

13. Kunststoffmasse und/oder Kunststoffformteil und/oder Kunststoffkörper nach Anspruch 12,
**dadurch gekennzeichnet, dass**
dass das wenigstens eine Farbpigment mit einem Anteil von maximal 4 Gew.-% in der Kunststoffmasse und/oder dem Kunststoffformteil und/oder dem Kunststoffkörper enthalten ist.

14. Verfahren zum Einfärben einer Kunststoffmasse und/oder eines Kunststoffformteils und/oder eines Kunststoffkörpers nach einem der Ansprüche 12 oder 13 mit einem Masterbatch nach einem der Ansprüche 1 bis 10 und/oder einem nach einem Verfahren nach Anspruch 11 hergestellten Masterbatch,
**dadurch gekennzeichnet, dass**
die Kunststoffmasse und/oder das Kunststoffformteil und/oder der Kunststoffkörper einen Kunststoff enthält oder aus einem Kunststoff gebildet ist, der eine Verarbeitungstemperatur größer 230°C, insbesondere größer 270°C, besonders bevorzugt größer 300°C aufweist, wobei der Kunststoff besonders bevorzugt ein Polyamid oder ein Polyester ist oder enthält, und wobei der Kunststoff und der Masterbatch gemischt und bei einer Temperatur größer 230°C, insbesondere größer 270°C, besonders bevorzugt größer 300°C homogenisiert werden.

15. Verfahren nach Anspruch 14,
**dadurch gekennzeichnet, dass**
dass der Masterbatch in einem solchen Verhältnis zugegeben wird, dass das wenigstens eine Farbpigment mit einem Anteil von maximal 4 Gew.-% in der Kunststoffmasse und/oder dem Kunststoffformteil und/oder dem Kunststoffkörper enthalten ist.
